# EUROPEAN PATENT SPECIFICATION

(11) **EP 1 642 867 B1**
(45) Date of publication and mention of the grant of the patent: **08.08.2018**
(21) Application number: 04745514.2
(22) Date of filing: 02.06.2004
(51) Int. Cl.: C02F 1/469, B01D 61/48, C02F 1/20, C02F 1/44, C02F 9/00, C02F 1/46

(54) **ELECTRIC TYPE DEIONIZED WATER PRODUCTION APPARATUS OPERATING METHOD, ELECTRIC TYPE DEIONIZED WATER PRODUCTION SYSTEM, AND ELECTRIC TYPE DEIONIZED WATER PRODUCTION APPARATUS**
VERFAHREN ZUM BETREIBEN EINER VORRICHTUNG ZUR PRODUKTION VON ENTIONISIERTEM WASSER VOM ELEKTRISCHEN TYP, SYSTEM ZUR PRODUKTION VON ENTIONISIERTEM WASSER VOM ELEKTRISCHEN TYP UND VORRICHTUNG ZUR PRODUKTION VON ENTIONISIERTEM WASSER VOM ELEKTRISCHEN TYP
PROCEDE DE FONCTIONNEMENT D'APPAREIL DE PRODUCTION D'EAU DEIONISEE DE TYPE ELECTRIQUE, SYSTEME DE PRODUCTION D'EAU DEIONISEE DE TYPE ELECTRIQUE ET APPAREIL DE PRODUCTION D'EAU DEIONISEE DE TYPE ELECTRIQUE

(30) Priority: 09.06.2003 JP 2003163306
(43) Date of publication of application: 05.04.2006
(73) Proprietor: Organo Corporation, Tokyo 136-8631 (JP)
(72) Inventor: Kawaguchi, Osamu, Tokyo136-8631 (JP); Hidaka, Masao, Tokyo136-8631 (JP)
(74) Representative: Viering, Jentschura & Partner mbB Patent- und Rechtsanwälte
(86) International application number: PCT/JP2004/007615
(87) International publication number: WO 2004/108606

(56) References cited:
- WO-A1-98/11987
- WO-A2-01/85313
- WO-A2-01/85313
- WO-A2-02/096807
- JP-A- 2002 205 071
- US-A- 4 969 983
- US-A- 5 925 255
- US-B1- 6 187 162
- US-B1- 6 187 162

## Description

### BACKGROUND OF THE INVENTION

### 1. Field of the Invention

The present invention relates to an electrodeionization (hereinafter simply referred to as "EDI") deionized water producing apparatus used in the fields of various industries such as semiconductor manufacture, pharmaceutical manufacture, power generation such as fossil-fueled and nuclear power generation, and food industry and in research facilities.

### 2. Description of the Related Art

US 6,187,162 B1 discloses an electrodeionization apparatus for purifying water including calcium and carbon dioxide and its hydrates. WO 01/85313 A2 discloses an electrodeionization module, and JP 2002 11476 A discloses a method of operating an electric deionization device. WO 02/096807 A2 discloses another electrodeionization apparatus and method for purifying a liquid.

As a method for producing deionized water, conventionally, a method is known in which water to be treated is forced through ion exchange resins . In this method, however, when the ion exchange resins are exhausted with impurity ions, it is necessary to apply a regeneration process using chemical reagents . In order to overcome disadvantages associated with such a treatment operation, a deionization deionized water producing method has been developed and commercialized using EDI which does not require regeneration using chemical reagents.

In the conventional EDI, cation exchange membranes and anion exchange membranes are alternately placed spaced from each other and an ion exchanger is filled in every other space formed between the cation and anion exchange membranes to form desalination chambers . Power saving EDIs in which the structure of the desalination chamber is fundamentally changed have been developed in place of the conventional EDI.

Such a power saving EDI is described in, for example, Japanese Patent Laid-Open Publication No. 2001-239270 and has a structure in which ion exchanger (s) is filled in two small desalination chambers formed by a cation exchange membrane on one side, an anion exchange membrane on the other side, and an intermediate ion exchange membrane positioned between the cation exchange membrane and the anion exchange membrane to form a desalination chamber consisting of the two small desalination chambers, a concentrating chamber is provided on both sides of the desalination chamber via the cation exchange membrane and the anion exchange membrane, and the desalination chamber and the concentrating chambers are placed between an anode chamber having an anode and a cathode chamber having a cathode. While a voltage is applied, water to be treated is passed through one of the small desalination chambers, the water flowing out of the small desalination chamber is passed through the other small desalination chamber, and concentrate water is passed through the concentrating chambers to remove impurity ions derived from the water to be treated, to obtain deionized water. With an EDI of this structure, it is possible to employ a configuration, for example, having a single ion exchanger of only an anion exchanger or only a cation exchanger or having a mixed exchanger of an anion exchanger and a cation exchanger as the ion exchanger to be filled into at least one of the two small desalination chambers. With such a configuration, it is possible to reduce the electrical resistance based on the type of the individual ion exchanger and to set the thickness to an optimum thickness of the ion exchanger for achieving a high performance.

When, however, the hardness of the water to be treated flowing into the EDI is high, scales consisting of calcium carbonate, magnesium hydroxide, or the like may be formed in the concentrating chamber of the EDI. When scales are formed, the electrical resistance at the portion in which the scales are formed increases and it becomes more difficult for the current to flow. In other words, in order to apply a current having the same current value as in the case in which no scale is formed, the voltage must be increased, and thus, the power consumption increases. In addition, depending on the place of adhesion of scales, the current density may vary within the concentrating chamber, resulting in unevenness of current within the desalination chamber. Moreover, when the amount of adhesion of scales is further increased, the differential pressure through the system is increased and the voltage is further increased, and, when the voltage exceeds the maximum voltage of the apparatus, the current value is reduced. In this case, a current necessary for removing ions cannot be applied, resulting in degradation of quality of treated water. Furthermore, there is also a possibility that grown scales intrude into the ion exchange membrane to ultimately break the ion exchange membrane.

As a countermeasure for solving this problem, a method is known in which water to be treated having a low hardness is passed through the EDI. If the hardness of the water to be treated is low, the solubility product is not reached inside the concentrating chamber, product and therefore, no scale will be formed. However, in reality, even when such water to be treated having a low hardness is passed through and treated, there are cases in which scales of calcium carbonate, magnesium hydroxide, etc. are formed within the concentrating chamber. In these cases, problems similar to those described above would be encountered.

Japanese Patent Laid-Open Publication No. 2001-225078 discloses an EDI in which an anion exchanger having a specific structure is placed on the side of the concentrating chamber near an anion exchange membrane. With this EDI, a diffusive dilution of OH⁻ ions to the concentrating liquid is accelerated by a surface of a porous anion exchanger and the OH⁻ ion concentration on the surface is quickly reduced. On the other hand, it becomes more difficult for hardness ions to intrude into the inside of the porous anion exchanger, resulting in reduced number of opportunities of contact between the OH⁻ ions and the hardness ions, and, consequently, inhibition of deposition and accumulation of hardness components.

Japanese Patent Laid-Open PublicationNo. 2002-1345 discloses an EDI in which an ion exchanger to be stored in a concentrating chamber includes at least two layers having different water permeability with the layer having a smaller water permeability being provided on the side of the anion exchange membrane and having anion exchange groups at least on its surface. With this EDI, when concentrated liquid which has moved through the layer with a larger water permeability and having a large amount of hardness components reaches the layer with the smaller water permeability, the mobility of hardness components is reduced. Hence, flow of hardness components into the surface of the side of the anion exchange membrane near the concentrating chamber is prevented, and deposition and accumulation of hardness components are inhibited.

In Japanese Patent Laid-Open Publication Nos . 2001-225078 and 2002-1345, however, the conditions for the water to be supplied to the concentrating chamber are not specified and it is not clear whether or not the scale formation can be prevented in a long-term operation. In addition, there is no description of any influences of the invention on the quality of EDI-treated water.

As the water to be supplied to the EDI, typically, permeated water of a reverse osmosis membrane in which tap water or industrial water is roughly desalinated is used. In a reverse osmosis membrane, ion components are removed, but most of gases permeates through and is not removed. As such, free carbon dioxide of high concentration which permeates through the membrane as carbon dioxide gas will remain within the permeated water of the reverse osmosis membrane. The free carbon dioxide is an anionic load on the EDI, and, because the free carbon dioxide is a weak acid, it tends to remain in the treated water, bringing about inferior water quality. Because of this, a carbon dioxide removal device such as a membrane degassing apparatus is provided upstream of the EDI to thereby supply water in which carbonic acid is removed to the EDI to reduce the load of carbonic acid and to consequently improve the quality of the treated water. Moreover, this method for providing a cabon dioxide removal device is also effective for improving the silica removal performance which is more difficult to remove than carbon dioxide. Therefore, when a high purity is required for the quality of the treated water, a carbon dioxide removal device is required.

However, even when a carbon dioxide removal device is provided upstream of the EDI, the treated water of the carbon dioxide removal device is used as the water to be treated in the EDI and the concentrate water in the EDI, and an anion exchanger is provided in the concentrating chamber on the side of the anion exchange membrane near the anode in order to obtain high purity quality of the treated water, there are cases in which scales of hardness components or the like are formed in a long-term operation.

### SUMMARY OF THE INVENTION

The present invention provides a method for operating an electrodeionization deionized water producing apparatus as defined in claim 1, a method for operating an electrodeionization deionized water producing apparatus as defined in claim 2, an electrodeionization deionized water producing system as defined in claim 5, an electrodeionization deionized water producing system as defined in claim 6. Further embodiments of the invention are described in the dependent claims.

Thus, e.g. , the present invention advantageously provides an EDI in which water having free carbon dioxide is supplied to a concentrating chamber filled with an anion exchanger on the side of an anion exchange membrane near an anode. With this structure, formation of scales within the concentrating chamber can be inhibited even in a long-term operation. In addition, an anion exchanger is placed within the concentrating chamber on the side of an anion exchange membrane near an anode and a water permeating material having no strong basic anion exchange group is provided between said anion exchanger and a cation exchange membrane. With such a structure, because the anion exchanger substantially does not come in contact with the cation exchange membrane, bicarbonate ions which have passed through the anion exchanger are diffused to the downstream along with the concentrate water before the bicarbonate ions reach the cation exchange membrane, and thus, degradation in the quality of treated water can be prevented.

According to a first aspect of the present invention, there is provided an EDI deionized water producing apparatus comprising, between an anode chamber having an anode and a cathode chamber having a cathode, a desalination chamber in which a side near the anode is separated by an anion exchange membrane and a side near the cathode is separated by a cation exchange membrane, and a concentrating chamber in which a side near the anode is separated by a cation exchange membrane, a side near the cathode is separated by an anion exchange membrane, and an anion exchanger is filled in the anode side of the anion exchange membrane. In the EDI deionized water producing apparatus, water having free carbon dioxide is supplied to the concentrating chamber.

A mechanism for the formation of scales within the EDI will now be described. When a current is applied in an EDI, carbonic acid (carbon dioxide) (a collective term which includes free carbon dioxide, bicarbonate ions, and carbonate ions) in the water to be treated is captured by an anion exchange resin as carbonate ions by actions of a large amount of hydroxide ions generated by dissociation of water in the desalination chamber. The carbonate ions pass through the anion exchange membrane on the side near the anode along with hydroxide ions and other anions such as chloride ions captured by the resin and move to the concentrating chamber. Because of this, the pH in a region of the concentrating chamber near the anion exchange membrane locally becomes alkaline. Likewise, hardness ions such as calcium ions and magnesium ions captured by a cation exchange resin and passed through the cation exchange membrane accumulate on the surface of the anion exchange membrane in the concentrating chamber. Then, the carbonate ions and the hydroxide ions come in contact with the calcium ions and magnesium ions, resulting in deposition of calcium carbonate and magnesium hydroxide as scales.

When an anion exchanger is present on the anode side of the anion exchange membrane in the concentrating chamber as in the first aspect of the present invention, the carbonate ions and hydroxide ions passing through the anion exchange membrane do not move to the concentrate water, but instead, pass through the anion exchanger having a high conductivity. In this process, when free carbon dioxide is included in the concentrating water flowing through the concentrating chamber, the free carbon dioxide reacts with the carbonate ions and hydroxide ions flowing through the anion exchanger to form bicarbonate ions. The bicarbonate ions are finally discharged into the concentrate water on the anode side of the anion exchanger. Because calcium bicarbonate and magnesium bicarbonate are far less likely be deposited than calcium carbonate and magnesium hydroxide, generation of scales within the concentrating chamber can be inhibited. In addition, the bicarbonate ions released into the concentrate water reacts with hydrogen ions which have passed through the cation exchange membrane from the other side to form free carbon dioxide. The free carbon dioxide thus obtained can then react with the carbonate ions and hydroxide ions within the ion exchanger downstream of the concentrating chamber. In this manner, according to this aspect of the present invention, a shift in pH which may otherwise occur within the concentrating chamber near the anion exchange membrane can be alleviated.

According to a second aspect of the present invention, there is provided an EDI deionized water producing apparatus comprising, between an anode chamber having an anode and a cathode chamber having a cathode, a desalination chamber in which a side near the anode is demarcated by an anion exchange membrane and a side near the cathode is demarcated by a cation exchange membrane, and a concentrating chamber in which a side near the anode is demarcated by a cation exchange membrane and a side near the cathode is demarkated by an anion exchange membrane and which concentrating chamber is filled with a mixture ion exchanger of an anion exchanger and a cation exchanger. Water having free carbon dioxide is supplied to the concentrating chamber. In the second aspect of the present invention, because a cation exchanger for supplying hydrogen is mixed with an anion exchanger and the mixture exchanger is used to fill the chamber, the bicarbonate ions moving through the anion exchanger become free carbon dioxide before the bicarbonate ions reach the cation exchanger by an action of hydrogen ions supplied from the cation exchanger and are released into the concentrate water. Because of this, it is possible to prevent an increase in a concentration of free carbon dioxide near the cation exchange membrane and to alleviate influences upon the quality of the treated water.

According to a third aspect of the present invention, it is preferable that, in the structure of the first aspect of the present invention, in the concentrating chamber, an anion exchanger is provided on the anode side of the anion exchange membrane and a water permeating material which does not have a strong basic anion exchange group is provided between the anion exchanger and the cation exchange membrane.

According to the third aspect of the present invention, because the anion exchanger does not come in contact the cation exchange membrane in the concentrating chamber, the concentration of the free carbon dioxide near the cation exchange membrane does not increase, and thus, it is possible to prevent degradation of quality of the treated water. Specifically, because a water permeating material having no strong basic anion exchange group is provided on the side near the cation exchange membrane, the bicarbonate ions moving from the anion exchanger cannot further move to the side near the cation exchange membrane at the water permeating material, and are released from the anion exchanger and become free carbon dioxide. This free carbon dioxide is diffused to the downstream along with the concentrate water flowing through the water permeating material, and thus, it is possible to prevent the concentration of free carbon dioxide from increasing near the cation exchange membrane.

In the structure of the second aspect of the present invention, the mixture ion exchanger filled into the concentrating chamber is a mixture ion exchanger in which the percentage of cation exchanger is increased from the side near the anion exchange membrane toward the cation exchange membrane. Because the percentage of the anion exchanger at the side near the cation exchange membrane is low, the concentration of the free carbon dioxide near the cation exchange membrane can be more reliably reduced.

According to a fourth aspect of the present invention, it is preferable that the water to be supplied to the concentrating chamber has a concentration of free carbon dioxide of 0.5 mg-CO₂/l - 200 mg-CO₂/l. Therefore, it is possible to use, for example, water pretreated with a reverse osmosis membrane in which tap water or industrial water is roughly desalinated.

According to a fifth aspect of the present invention, there is provided an EDI deionized water producing apparatus (EDI) comprising, between an anode chamber having an anode and a cathode chamber having a cathode, a desalination chamber in which a side near the anode is demarcated by an anion exchange membrane and a side near the cathode is demarcated by a cation exchange membrane, and a concentrating chamber having a side near the anode demarcated by a cation exchange membrane, a side near the cathode demarcated by an anion exchange membrane, and the anode side of the anion exchange membrane is filled with an anion exchanger. Pipes are provided and connected such that treated water of a decarbonator device provided upstream of the EDI deionized water producing apparatus is introduced into a feed pipe of the water to be treated by the EDI deionized water producing apparatus and the water to be treated by the decarbonator device is introduced into a feed pipe of concentrate water of the EDI deionized water producing apparatus.

According to a sixth aspect of the present invention, there is provided an EDI deionized water producing apparatus comprising, between an anode chamber having an anode and a cathode chamber having a cathode, a desalination chamber in which a side near the anode is demarcated by an anion exchange membrane and a side near the cathode is demarcated by a cation exchange membrane, and a concentrating chamber in which a side near the anode is demarcated by a cation exchange membrane and a side near the cathode is demarcated by an anion exchange membrane, and which concentrating chamber is filed with a mixture ion exchanger of an anion exchanger and a cation exchanger. Pipes are provided and connected such that treated water of a decarbonator device provided upstream of the EDI deionized water producing apparatus is introduced into a feed pipe for water to be treated by the EDI deionized water producing apparatus and the water to be treated by the decarbonator device is introduced into a feed pipe of concentrate water of the EDI deionized water producing apparatus.

In the EDI deionized water producing apparatus according to the sixth aspect of the present invention, the mixture ion exchanger in the concentrating chamber is a mixture ion exchanger in which a percentage of the cation exchanger increases from the side near the anion exchange membrane toward the cation exchange membrane.

### BRIEF DESCRIPTION OF THE DRAWINGS

Fig. 1 is a schematic diagram showing an EDI deionized water producing system according to a preferred embodiment of the present invention.
Fig. 2 is a schematic diagram showing an EDI deionized water producing system according to another preferred embodiment of the present invention.
Fig. 3 is a schematic diagram showing an EDI deionized water producing system according to still another preferred embodiment of the present invention.
Fig. 4 is a schematic diagram showing an EDI deionized water producing system according to yet another preferred embodiment of the present invention.
Fig. 5 is a simplified diagram showing a structure of an EDI deionized water producing apparatus.
Fig. 6 is a simplified diagram showing a structure of an EDI deionized water producing apparatus.
Fig. 7 is a simplified diagram showing another example structure of a concentrating chamber.

### DESCRIPTION OF PREFERRED EMBODIMENT

### [Example structure of an EDI deionized water producing apparatus]

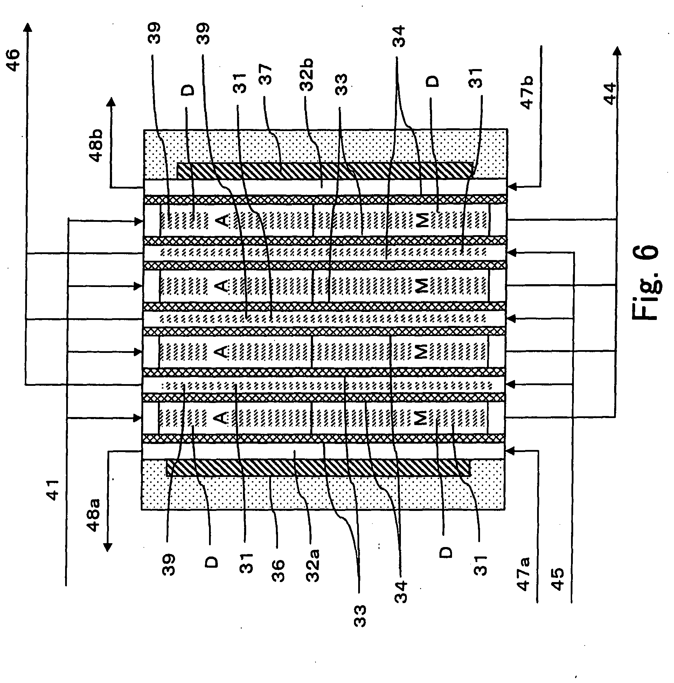

An example structure of an EDI deionized water producing apparatus suitable for use in a preferred embodiment of the present invention but not showing all features of claims 2 and 6 will now be described referring to Fig. 6. Between an anode chamber 32b having an anode 37 and a cathode chamber 32a having a cathode 36, desalination chambers D, each of which has a side near the anode 37 separated by an anion exchange membrane 34 and a side near the cathode 36 separated by a cation exchange membrane 33 and concentrating chambers 31, each of which has a side near the anode 37 separated by the cation exchange membrane 33 and a side near the cathode 36 separated by the anion exchange membrane 34 are alternately provided.

An upper portion of the desalination chamber D is filled with an anion ion exchanger A and a lower portion of the desalination chamber D is filled with a mixture ion exchanger in which an anion ion exchanger and a cation ion exchanger are mixed. On the other hand, a side of the concentrating chamber 31 near the anode is separated by the cation exchange membrane 33, a side of the concentrating chamber 31 near the cathode is separated by the anion exchange membrane 34, and the concentrating chamber 31 is filled with a mixture ion exchanger of an anion exchanger and a cation exchanger.

The ion exchanger to be filled in the desalination chamber D is not limited to those specifically described above, and may alternatively be only an anion exchange resin, only a cation exchange resin, or only a mixture ion exchange resin, depending on water to be treated.

In such a device, a DC current is applied between the cathode 36 and the anode 37, water to be treated is supplied from an introduction line 41 for water to be treated, and concentrate water is supplied from an introduction line 45 for concentrate water. In addition, cathode water and anode water are supplied respectively from an introduction line 47a for cathode water and an introduction line 47b for anode water.

The water to be treated flowing from the introduction line 41 for water to be treated flows down the desalination chamber D in which impurity ions are removed while the water to be treated passes through the filled layers of the anion exchanger A and the mixture ion exchanger M, and deionized water is obtained from an exit line 44 for deionization water.

The concentrate water flowing from the introduction line 45 for concentrating water moves upwards in each concentrating chamber 31 and receives within the concentrating chamber impurity ions moving through the cation exchange membrane 33 and through the anion exchange membrane 34 and impurity ions moving through the mixture ion exchanger 39. The concentrate water is then discharged from an exit line 46 for concentrating chamber as concentrated water in which impurity ions are concentrated.

Moreover, the cathode water flowing from the introduction line 47a for cathode water is discharged from an exit line 48a for cathode water and the anode water flowing from the introduction line 47b for anode water is discharged from an exit line 48b for anode water.

With these operations, impurity ions within the water to be treated supplied from the introduction line 41 for water to be treated are electrically removed and deionized water from which the impurity ions are removed is obtained at the exit line 44 for deionized water. In addition, concentrated water in which impurity ions are concentrate is obtained from the exit line 46 for concentrated water.

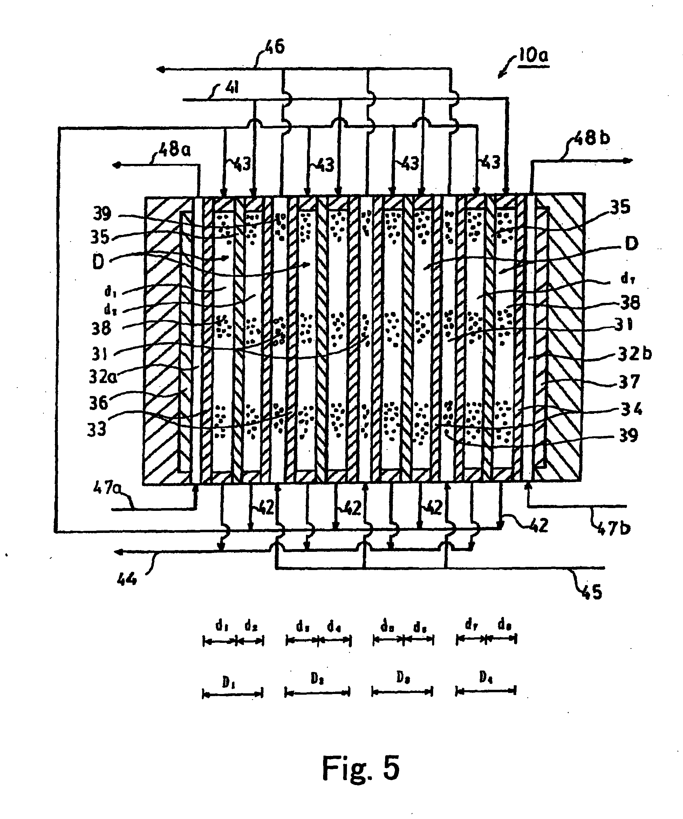

The EDI deionized water producing apparatus may alternatively be formed in a configuration as shown in Fig. 5. A structure of a desalination chamber in this configuration is described in Japanese Patent Laid-Open Publication No. 2001-239270.

As shown in Fig. 5, in an EDI deionized water producing apparatus 10a not showing all features of claims 2 and 6, desalination chambers D and concentrating chambers 31 are alternately provided between an anode chamber 32b having an anode 37 and a cathode chamber 32a having a cathode 36. In the desalination chamber D, a side near the anode is demarcated by an anion exchange membrane 34 and a side near the cathode is demarcated by a cation exchange membrane 33, and the desalination chamber D comprises two small desalination chambers d₁ and d₂ separated by an intermediate ion exchange membrane 35 provided between the anion exchange membrane 34 and the cation exchange membrane 33 . On the other hand, in the concentrating chamber 31, a side near the anode is separated by the cation exchange membrane 33 and a side near the cathode is separated by the anion exchange membrane 34, and the concentrating chamber 31 is filled with a mixture ion exchanger 39 of an anion ion exchanger and a cation ion exchanger.

As shown in the lower portion of Fig. 5, a desalination chamber D₁ is formed of a first small desalination chamber d₁ and a second small desalination chamber d₂ and a desalination chamber D₂ is formed of a first small desalination chamber d₃ and a second small desalination chamber d₄. Similarly, a desalination chamber D₃ is formed of a first small desalination chamber d₅ and a second small desalination chamber d₆ and a desalination chamber D₄ is formed of a first small desalination chamber d₇ and a second small desalination chamber d₈.

Normally, the EDI deionized water producing apparatus 10a is operated as follows. A DC current is applied between the cathode 36 and the anode 37. Water to be treated is supplied from the introduction line 41 for water to be treated, concentrate water is supplied from the introduction line 45 for concentrate water, and cathode water and anode water are supplied respectively from the introduction line 47a for cathode water and the introduction line 47b for anode water. The water to be treated supplied from the introduction line 41 for water to be treated flows down the second small desalination chambers d₂, d₄, d₆, and d₈ and impurity ions are removed while the water to be treated passes through the filled layer of ion exchanger 38. The discharge water flowing through the exit line 42 for treated water of the second small desalination chamber is introduced through an introduction line 43 for water to be treated of the first small desalination chamber to the first small desalination chambers d₁, d₃, d₅, and d₇. The water to be treated flows down the first small desalination chambers d₁, d₃, d₅, and d₇ and impurity ions are removed when the water to be treated passes through the filled layer of the ion exchanger 38. Deionized water is thus obtained from the exit line 44 for deionized water.

The concentrate water flowing from the introduction line 45 for the concentrating water moves upward through each concentrating chamber 31, receives impurity ions moving through the cation exchange membrane 33 and through the anion exchange membrane 34 and impurity ions moving through the ion exchanger within the concentrating chamber as will be described later, and is discharged from the exit line 46 for concentrating chamber as concentrated water in which impurity ions are concentrated.

The cathode water supplied from the introduction line 47a for cathode water is discharged from the exit line 48a for cathode water and the anode water supplied from the introduction line 47b for anode water is discharged from the exit line 48b for anode water.

With these operations, impurity ions within the water to be treated supplied from the introduction line 41 for water to be treated are electrically removed and deionized water from which the impurity ions are removed can be obtained from the exit line 44 for deionized water. In addition, concentrate water in which impurity ions are concentrate is obtained from the exit line 46 for concentrated water.

In the EDI deionized water producing apparatus of the present embodiment, by filling with an anion exchange the second small desalination chambers d₂, d₄, d₆, and d₈ to which the water to be treated flows and the first small desalination chambers d₁, d₃, d₅, and d₇ receiving the water exiting from the second small desalination chamber as the water to be treated with a mixture ion exchanger, it is possible to remove silica, carbonic acid, or the like in both the second and first small desalination chambers . Because of this, it is possible to sufficiently treat water to be treated which contains, in a large proportion, weak acid compositions such as silica carbonic acid which are difficult to remove. As a result, it is possible to omit provision of the decarbonator device for reducing free carbon dioxde as an upstream treatment of the EDI deionized water producing apparatus.

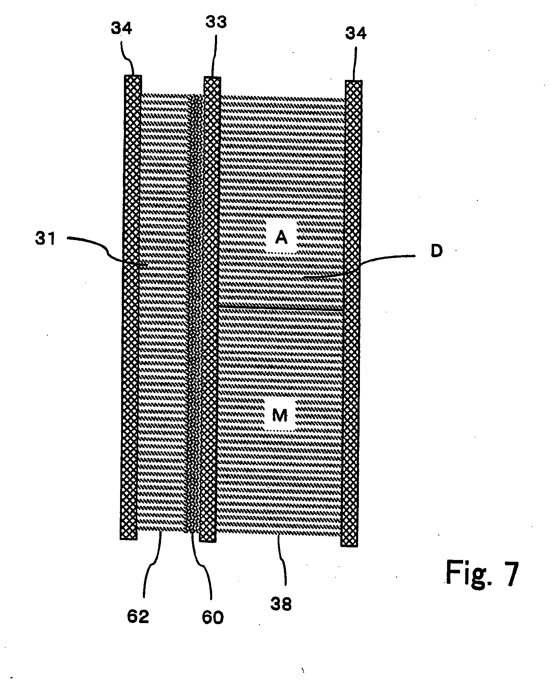

In the EDI deionized water producing apparatus shown in Figs. 5 and 6 described above, the concentrating chamber is filled with the mixture ion exchanger 39. The material to fill the concentrating chamber 31 is, however, not limited to the mixture ion exchanger. For example, it is also possible to employ a configuration as shown in Fig. 7 in which an anion exchanger 62 is provided on the anode side of the anion exchange membrane 34 and a water permeating material 60 having no strongly basic anion exchange group is provided between the anion exchanger 62 and the cation exchange membrane 33.

### [First operation method]

In a first method of operation, in an EDI deionized water producing apparatus having, between an anode chamber having an anode and a cathode chamber having a cathode, a desalination chamber in which a side near the anode is demarcated by an anion exchange membrane and a side near the cathode is demarcated by a cation exchange membrane and a concentrating chamber in which a side near the anode is demarcated by a cation exchange membrane and a side near the cathode is demarcated by an anion exchange membrane and which concentrating chamber is filled with an anion exchanger on the anode side of the anion exchange membrane, water containing free carbon dioxide is supplied to the concentrating chamber.

In the operation method according to this preferred embodiment, an apparatus as described above and shown in Figs. 5, 6, and 7 may be used as the EDI having, deionized water producing apparatus between an anode chamber having an anode and a cathode chamber having a cathode, a desalination chamber in which a side near the anode is separated by an anion exchange membrane and a side near the cathode is separated by a cation exchange membrane and a concentrating chamber in which a side near the anode is demarcated by a cation exchange membrane and a side near the cathode is demarcated by an anion exchange membrane.

An example of the anion exchanger includes a strongly basic anion exchanger. Examples of forms of the anion exchanger include, an anion exchange resin, an anion exchange fiber, and an organic porous anion exchanger described in Japanese Patent Laid-Open Publication No. 2002-306976, The strongly basic anion exchanger may partially include weakly basic anion exchange group. Among these different forms, an anion exchange resin is preferred because the exchange capacity per filled volume is large, and therefore the residence time of carbonate ions is long, and time for allowing reaction with the free carbon dioxide in the concentrating water is long, which consequently result in sufficient amount of reaction to occur even with a low concentration of free carbon dioxide, and thus, inhibition of formation of scales. In addition, when the particle size of the anion exchange resin is uniform, the differential pressure across the concentrating chamber is reduced, and, thus, the use of an anionic exchange resin is desirable.

A desired salt-splitting capacity of the anion exchanger is 0.75 g CaCO₃/l - 75 g CaCO₃/l (wet resin). When the capacity is less than 0.75 g CaCO₃/l, the EDI system is not desirable because the residence time of carbonate ions is reduced and the time for allowing reaction with the free carbon dioxide in the concentrate water is reduced. When, on the other hand, the capacity exceeds 75 g CaCO₃/l, the EDI system is also not desirable because the manufacturing cost of the anion exchanger is increased. When the anion exchanger is an anion exchange resin, the anion exchanger may be of either gel type or MR type. However, because the ion selectivity with respect to ions other than hydroxide ions of the gel type exchange resin is not as strong as that of the MR type exchange resin and the electrical resistance of the gel type exchange resin in a form of salt is low, it is possible, with the gel type exchange resin, to more reliably receive carbonate ions and hydroxide ions moving from the anion exchange membrane and to move these ions to the side near the anode. Therefore, the gel type exchange resin is preferred over the MR type exchange resin.

The concentrating chamber may be of a form in which the entire concentrating chamber is filled with an anion exchanger alone. However, in this form, because the anion exchange groups exist continuously in the concentrating chamber, almost all of the bicarbonate ions within the anion exchanger move to the side of the cation exchange membrane, are concentrated, and are discharged into the concentrate water. As a result, the concentration of free carbon dioxide near the cation exchange membrane becomes high and degradation of quality of the treated water tends to occur. In view of this, it is desirable to employ a form of a concentrating chamber in which an anion exchanger is provided on the anode side of the anion exchange membrane and a water permeating material having no strong basic anion group is provided between the anion exchanger and the cation exchange membrane, because in this form, the anion exchanger does not come in contact with the cation exchange membrane in the concentrating chamber, the concentration of free carbon dioxide near the cation exchange membrane is not increased, and degradation of quality of the treated water can be prevented. Examples of the anion exchanger to be provided on the anode side of the anion exchange membrane include those anion exchangers described above.

The water permeating material having no strong basic anion exchange group which is provided between the anion exchanger and the cation exchange membrane is used to secure flow pathes for the concentrate water and to prevent contact between the anion exchange group and the cation exchange membrane. Therefore, the water permeating material having no strong anion exchange group may be either a conductive water permeating material or non-conductive water permeating material. When a conductive water permeating material is to be used, it is possible to use water permeating material having an exchange group other than the strongly basic anion exchange group such as a weakly basic anion exchange group, a weakly acidic cation exchange group, and a strongly acidic cation exchange group. Examples of a material having a weakly acidic cation exchange group or a strong acidic cation exchange group include, for example, a cation exchange fiber and a cation exchange resin. In particular, when a cation exchange resin is to be used, it is desirable to use a cation exchange resin having a degree of cross-linkage of 4% or less as such a resin allows for reduction of selectivity for divalent ions such as calcium ion, magnesium ion, and the like, increase in selectivity of hydrogen ion, and reduction of opportunity of contact between hardness components and carbonate ions. Examples of non-conductive water permeating material include, for example, a mesh-shaped structure, a nonwoven fabric, a woven fabric, and other porous materials. Of these, a mesh-shaped structure is desirable as the selection of mesh size is easy, water permeability is high, and it does not tends to cause an increase in differential pressure in the concentrating chamber.

The thickness of the concentrating chamber is preferably between 0.5 mm and 6 mm, and is more preferably between 1.0 mm and 3 mm. When the thickness of the concentrating chamber is less than 0.5 mm, even when the concentrating chamber is filled with an ion exchanger, the advantage of inhibiting formation of scales is less effectively obtained and the differential pressure across the chamber water tends to increase. When, on the other hand, the thickness exceeds 6 mm, the electrical resistance is increased and the power consumption is increased. Although the thickness of the water permeating material having no strong basic anion exchanger is not limited, it is preferable that the thickness is between 0.1 mm and 2.0 mm, and it is more preferable that the thickness is between 0.2 mm and 1.0 mm. When the thickness of the water permeating material is less than 0.1 mm, a distance between a portion in which the free carbon dioxide is generated and the cation exchange membrane is reduced, resulting in a high concentration of free carbon dioxide near the cation exchange membrane. When, on the other hand, the thickness exceeds 2.0 mm, the electrical resistance of the water permeating material is increased and the power consumption is increased. The concentrating chamber having this structure is a two-layered structure of an anion exchanger and a water permeating material having no strong basic anion exchange group, but it is only required that the anion exchanger and the cation exchange membrane be substantially not in contact with each other and the anion exchanger and the cation exchange membrane may partially contact each other wto an extent which does not hamper the advantages of the present invention.

When the anion exchanger to be filled in the anode side of the anion exchange membrane is an exchange resin in the form of beads, it is desirable to select a water permeating material having a finer mesh size than the effective size of the ion exchange resin beads because such sizing allows for reliable prevention of contact between the anion exchange resin and the cation exchange membrane. In addition, when the anion exchanger is an ion exchange resin in the form of beads, it is desirable to use an ion exchange resin having a relatively large average bead size and uniform distribution of bead size, because such a allows for a larger effective size of the ion exchange resin, and consequently, selection of a coarser mesh for the water permeating material, which result in a higher water permeability without an increase in differential pressure. The effective size of the ion exchange resin beads is defined by the mesh size of a screen which allows 10 volume% of the resin to pass through.

Water including free carbon dioxide which is used in the first method of operation is water having a concentration of free carbon dioxide of 0.5 mg CO₂/l - 200 mg CO₂/l, and preferably having a concentration of free carbon dioxide of 2 mg CO₂/l - 150 mg CO₂/l. When the concentration of free carbon dioxide is less than 0.5 mg CO₂/l, the advantage of inhibition of formation of scales is hampered and when the concentration of free carbon dioxide exceeds 200 mgCO₂/l, the amount of free carbon dioxide which diffuses into an adjacent desalination chamber through the cation exchange membrane is increased, resulting in degradation of the quality of the treated water. Specific examples of water including free carbon dioxide include permeate water of a reverse osmosis membrane in which tap water or industrial water is roughly desalinated. Although a reverse osmosis membrane removes ion compositions, it allows most of the gas compositions to pass through. As such, a high concentration of free carbon dioxide which has permeated thorough the reverse osmosis membrane as dissolved carbon dioxide gas remains in the permeate water. Therefore, it is possible to use the permeate water of the reverse osmosis membrane as the supply water of the concentrating chamber therby doing without adding any chemical to the water. The permeate water of the reverse osmosis membrane may also be used as the water to be fed to the desalination chamber of the EDI deionized water producing apparatus.

In a system in which a decarbonator is provided between the reverse osmosis membrane device and the EDI deionized water producing apparatus, it is desirable to employ a configuration in which the treated water of the decarbonator is used as the water to be supplied to the desalination chamber of the EDI unit (water to be treated by the EDI unit) and the permeate water of reverse osmosis membrane which is the water to be treated by the decarbonator device is also used as the water to be supplied to the concentrating chamber of the EDI unit, as such a configuration allows for supply, to the concentrating chamber, of water having free carbon dioxide in an amount necessary for inhibiting the formation of scale while reducing the concentration of free carbon dioxide which is a load on the desalination chamber. In addition, when the treated water of the decarbonator device is used both as the water to be supplied to the desalination chamber and as the water to be supplied to the concentrating chamber, it is desirable to circulate a portion of the exiting water of the concentrating chamber, mix the circulating water with the water having low concentration of free carbon dioxide, and supply to the concentrating chamber, as such a configuration allows for the exiting water of the concentrating chamber to have concentrated free carbon dioxide which is contained in the water to be treated, and consequently, allows for the use of the exiting water of the concentrating chamber as supply water to the concentrating chamber as water having high concentration of free carbon dioxide. The decarbonator device is not limited in its type, and, for example, a membrane type degasifier may be used.

### [Second operation method]

In a second method of operation, in an EDI deionized water producing apparatus comprising, between an anode chamber having an anode and a cathode chamber having a cathode, a desalination chamber in which a side near the anode is demarcated by an anion exchange membrane and a side near the cathode is demarcated by a cation exchange membrane, and a concentrating chamber in which a side near the anode is demarcated by a cation exchange membrane and a side near the cathode is demarcated by an anion exchange membrane and which is filled with a mixture ion exchanger of an anion exchanger and a cation exchanger, water containing free carbon dioxide is supplied to the concentrating chamber.

In the description of the second operation method, elements identical to those in the first operation method will be omitted and the differing portions will primarily be described. Specifically, the second operation method of the EDI unit differs from the first operation method of the EDI unit in that, in the second operation method, the material to fill the concentrating chamber is a mixture ion exchanger of an anion exchanger and a cation exchanger. According to the present embodiment, because a cation exchanger for supplying hydrogen ions is mixed with the anion exchanger and the mixture is filled, the bicarbonate ions moving through the anion exchanger is discharged into the concentrate water as free carbon dioxide before the hydrogen-carbonate ions reach the cation exchange membrane by an action of the bicarbonate from the cation exchanger. With this structure, it is possible to prevent an increase in the concentration of free carbon dioxide near the cation exchange membrane and the adverse influence on the quality of the treated water is alleviated.

As an anion exchanger in the mixture ion exchanger, it is possible to use anion exchangers similar to those described above. As the cation exchanger, any cation exchanger having the capability to supply hydrogen ions may be used, and examples of the cation exchanger include, for example, a strongly acidic cation exchanger, a weakly acidic cation exchanger, and a mixture cation exchanger of a strongly acidic cation exchanger and a weakly acidic cation exchanger. Examples of forms of the cation exchanger include a cation exchange resin, a cation exchange fiber, and an organic porous cation exchanger described in Japanese Patent Laid-Open Publication No. 2002-306976. It is desirable to use a mixture ion exchange resin of an anion exchange resin and a cation exchange resin as the mixture ion exchanger.

The mixture ion exchanger is a mixture ion exchanger in which the percentage of cation exchanger increases from the side near the anion exchange membrane toward the cation exchange membrane. With such a configuration, the percentage of the anion exchanger (anon exchange resin) at the side of the cation exchange membrane is low, which allows for reliable reduction of concentration of free carbon dioxide near the cation exchange membrane. Examples of the form in which the percentage of the cation exchanger increases from the side near the anion exchange membrane toward the cation exchange membrane include, for example, a form in which the percentage of the cation exchanger is progressively increased from the side near the anion exchange membrane toward the cation exchange membrane and a layered structure form in which, for example, a layer of an anion exchanger and a layer of a mixture material of an anion exchanger and a cation exchanger are placed in that order from the side near the anion exchange membrane toward the cation exchange membrane. In the case of a mixture ion exchange resin, it is preferable to use a mixture ion exchange resin with uniform particle size as such a configuration reduces the differential pressure across the concentrating chamber.

The percentage of the cation exchange resin within the mixture ion exchange resin is not limited, but is preferably 10% - 90% in volume, and more preferably 20% to 50% in volume. When the percentage of the cation exchange resin (in volume) is less than 10%, it is not possible to prevent the increase in the concentration of free carbon dioxide near the cation exchange membrane and when, on the other hand, the percentage exceeds 90%, the advantage of inhibition of formation of scales cannot be obtained, and thus, both of these percentage are not preferred. It is preferable that the degree of cross-linkage of the cation exchange resin is 4% or less, as such a cross-linkage allows for a reduction of selectivity of divalent ions such as calcium ions and magnesium ions and an increase in selectivity of hydrogen ions.

### [Example structure 1]

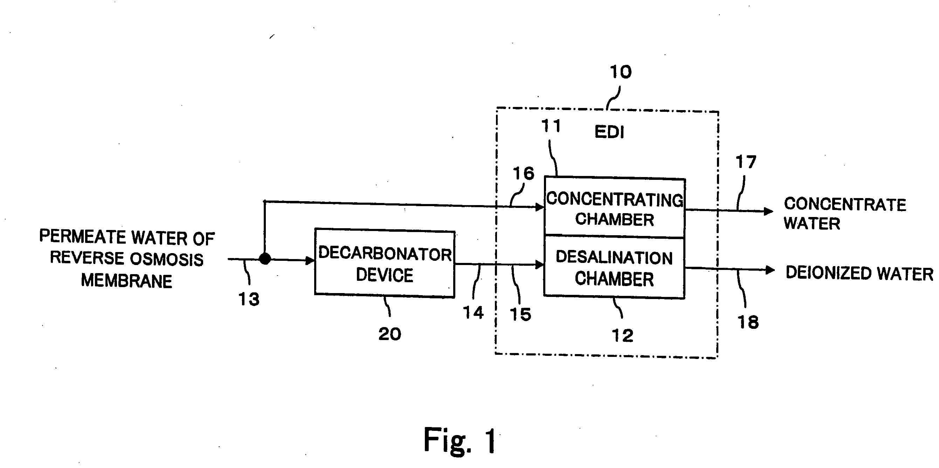

An EDI deionized water producing apparatus of a first example structure will now be described referring to Fig. 1. A decarbonator 20 is placed upstream of an EDI unit 10 having a desalination chamber 12 and a concentrating chamber 11. An exit pipe 14 for treated water of the decarbonator 20 and an introduction pipe 15 for water to be treated by the EDI unit are connected and an introduction pipe 13 for water to be treated by the decarbonator 20 and an introduction pipe 16 for concentrate water of the EDI unit 10 are connected. Reference numeral 17 represents an exit pipe for concentrate water and reference numeral 18 represents an exit pipe for deionized water. The treated water of the decarbonator 20 is supplied to the introduction pipe 15 for water to be treated by the EDI 10 unit and the water to be treated by the decarbonator 20 is supplied to the introduction pipe 16 for concentrate water of the EDI unit 10. As the decarbonator 20, any of the known structure may be used such as, for example, a membrane degasifier and a decarbonator column.

Therefore, the permeate water of reverse osmosis membrane which is the water to be treated is directly supplied to the concentrating chamber 11 and is also supplied to the desalination chamber 12 after carbon dioxide is removed in the decarbonator device 20.

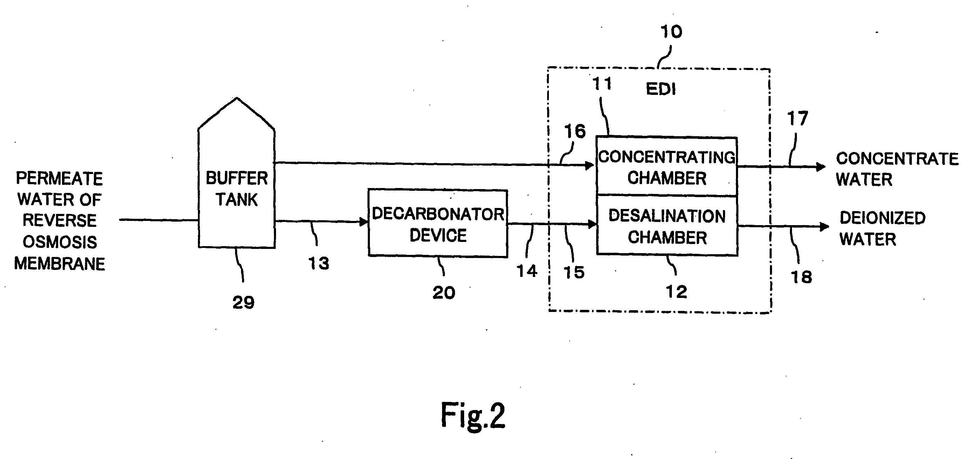

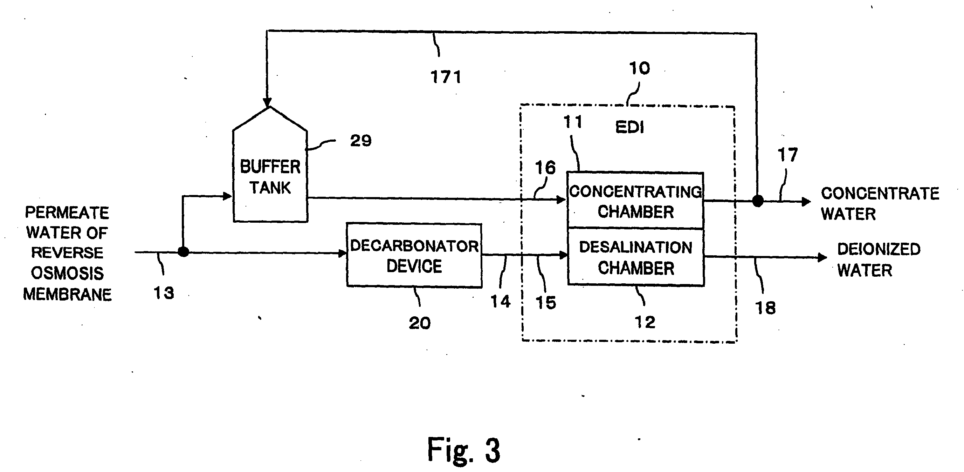

The treated water of the decarbonator 20 is supplied to the introduction pipe 15 for water to be treated by the EDI unit 10. In addition to the form shown in Fig. 1, the form of introduction of the water to be treated by the decarbonator 20 to the introduction pipe 16 for concentrate water of the EDI unit 10 may alternatively be one of the forms shown in Figs. 2 and 3.

In the system of Fig. 2, a buffer tank 29 for facilitating adjustment of an amount of flow of the concentrate water is provided upstream of the decarbonator 20. The upstream side of the introduction pipe 16 for concentrate water and the upstream side of the introduction pipe 13 for water to be treated by the decarbonator 20 are connected to the buffer tank 29. Thus, the water to be treated is supplied from the buffer tank 29 directly to the concentrating chamber 11 and to the desalination chamber 12 after the removal of carbon dioxide by in the decarbonator 20.

In the system of Fig. 3, the buffer tank 29 is provided midway along the introduction pipe 16 for concentrate water of the EDI unit 10 and a return pipe 171 is provided connecting the exiting pipe 17 for concentrate water and the buffer tank 29.

With this system also, the permeate water of the reverse osmosis membrane is supplied to the desalination chamber 12 after carbon dioxide is removed in the decarbonator 20. On the other hand, in the buffer tank 29, the permeate water of reverse osmosis membrane and the concentrated water are mixed and then supplied to the concentrating chamber 11.

As the EDI unit 10 in any of the systems shown in Figs. 1 through 3, a first EDI unit in which cation exchange membrane and anion exchange membrane are alternately provided between an anode chamber having an anode and a cathode chamber having a cathode and which has a desalination chamber in which a side near the anode is demarcated by an anon exchange membrane and a side near the cathode is demarcated by a cation exchange membrane and a concentrating chamber in which a side near the anode is demarcated by a cation exchange membrane, a side near the cathode is demarcated by an anion exchange membrane, and the anode side of the anion exchange membrane is filled with an anion exchanger may be used or a second EDI unit having a structure similar to the first EDI unit except that the anode side of the anion exchange membrane in the concentrating chamber is filled with a mixture ion exchanger of a cation exchanger and an anion exchanger instead of the anion exchanger may be used.

As the anion exchanger and the cation exchanger in the second EDI unit, materials similar to those described above regarding the operation methods may be used. The mixture ion exchanger is a mixture ion exchanger in which the percentage of the cation exchanger increases from the side near the anion exchange membrane toward the cation exchange membrane. With such a structure, because the percentage of the anion exchanger (anion exchange resin) at the side of the cation exchange membrane is low, and thus, it is possible to reliably reduce the concentration of free carbon dioxide near the cation exchange membrane. The form in which the percentage of the cation exchanger increases from the side near the anion exchange membrane toward the cation exchange membrane, the percentage of cation exchange resin within the mixture ion exchange resin, and the degree of cross-linkage of the cation exchange resin may be similar to those described above regarding the operation methods.

It is also preferable to employ a structure of the EDI unit with small desalination chambers as shown in Fig. 5. It is possible to use the EDI unit having the structure as shown in Fig. 5 as first or second EDI unit described above.

In the EDI of the first example structure shown in Figs. 1 through 3, the water to be treated which is supplied to the desalination chamber 12 is treated water of the decarbonator 20, and thus, the carbon dioxide is removed. On the other hand, no carbon dioxide is removed from the water which is supplied to the concentrating chamber 11. In this embodiment, because the water is treated (permeate) water of a reverse osmosis membrane, it is possible to supply, to the concentrating chamber 11, water having free carbon dioxide at a concentration necessary for inhibiting formation of scales while reducing the concentration of free carbon dioxide which is a load on the desalination chamber 12.

### [Example structure 2]

An EDI unit according to a second example structure of the present invention is a device in which cation exchange membranes and anion exchange membranes are alternately provided between an anode chamber having an anode and a cathode chamber having a cathode and which has a desalination chamber in which a side near the anode is demarcated by an anion exchange membrane and a side near the cathode is demarcated by a cation exchange membrane, and a concentrating chamber in which a side near the anode is demarcated by a cation exchange membrane, a side near the cathode is demarcated by an anion exchange membrane, an anion exchanger is provided on the anode side of the anion exchange membrane, and a water permeating material having no strong basic anion exchange group is provided between the anion exchanger and the cation exchange membrane.

The water to be treated by the EDI unit of the second example structure is not limited, and may be, for example, treated water of a decarbonator. The water to be supplied to the concentrating chamber is not limited as long as the water contains free carbon dioxide . As the anion exchanger and the water permeating material, structures similar to those described above regarding the operation methods may be used.

In the first and second example structures, the structure of the desalination chamber is not limited, and any of the structures as shown in, for example, Figs. 5 and 6 may be used.

### [Example structure 3]

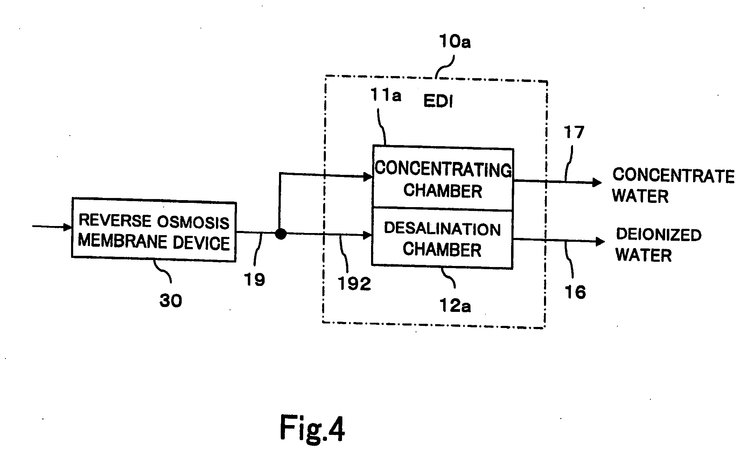

An EDI unit of a third example structure will now be described referring to Fig. 4. Fig. 4 is a schematic diagram showing an EDI unit in the third example structure. In Fig. 4, elements identical to those shown in Fig. 1 are assigned the same reference numerals and will not be described again, and the difference will primarily be described. In the structure of Fig. 4, no decarbonator upstream of an EDI unit 10a having a desalination chamber 12a and a concentrating chamber 11a is provided, a reverse osmosis membrane device 30 is provided, an exit pipe 19 for permeate water of the reverse osmosis membrane device 30 and an introduction pipe 192 for water to be treated by the EDI unit 10a are connected, and the introduction pipe 19 for permeated water is branched to form a supply pipe 191 of concentrate water.

In this third example structure, a device having a structure as shown in Fig. 5 and described above is used as the EDI unit. An anion exchanger is filled into second small desalination chambers d₂, d₄, d₆, and d₈ into which water to be treated flows and a mixture ion exchanger is filled into first small desalination chambers d₁, d₃, d₅, and d₇ having the exit water of the second small desalination chamber as the water to be treated. In this configuration, silica, carbonic acid, and the like can be removed both in the second small desalination chamber and the first small desalination chamber. Because of this, it is possible to sufficiently treat water to be treated having a large amount of silica and weak acidic compositions such as carbonic acid which is particularly difficult to remove among anion compositions. It is possible to omit the decarbonator for reducing free carbon dioxide as a pretreatment of the EDI unit.

### [Examples]

### Example 1

An EDI deionized water producing apparatus in which four deionization modules (eight small desalination chambers) are provided in parallel similar to the structure shown in Fig. 5 was used under the device specification and operation conditions as described below. Permeate water of a reverse osmosis membrane treating industrial water was used as water to be treated, with the hardness of the water to be treated being 1000 µg CaCO₃/l and the concentration of free carbon dioxide being 4 mg CO₂/l. In addition, a portion of the water to be treated was used directly as the concentrate water and electrode water. The operation time was 4000 hours and presence of scales in the concentrating chamber after 4000 hours was observed. Resistivity of the treated water and operation conditions after the operation of 4000 hour period are shown in Table 1.

### [Operation conditions]

EDI deionized water producing apparatus: Prototype EDI unit;
Intermediate ion exchange membrane: Anion exchange membrane;
First small desalination chamber: Width 100 mm, Height 300 mm, thickness 4 mm;
Ion exchange resin filled into first small desalination chambers: Mixture ion exchange resin of anion exchange resin (A) and cation exchange resin (C) (with mixture ratio in volume of A:C = 1:1);
Second small desalination chamber: Width 100 mm, Height 300 mm, thickness 8 mm;
Ion exchange resin filled into second small desalination chambers: Anion exchange resin;
Concentrating chamber: Width 100 mm, Height 300 mm, thickness 2 mm;
Ion exchange resin filled into concentrating chambers: Gel type strongly basic anion exchange resin (Amberlite IRA-402BL)
Rate of flow in overall device: 0.1 m³/h

### Example 2

An operation similar to that for the Example 1 was performed except that a mixture ion exchange resin of a cation exchange resin (Amberlyst30W with a degree of cross-linkage of 4%) and a gel type strong basic anion exchange resin (Amberlite IRA-402BL) (with a mixture ratio of A:C = 1:1 in volume) was filled in the concentrating chamber instead of the gel type strong basic anion exchange resin (Amberlite IRA-402BL) . Resistivity of the treated water after 4000 hours of operation and operational conditions are shown in Table 1.
Example 2 does not show all features of claims 2 and 6.

### Example 3

An operation similar to that for the Example 1 was performed except that a gel type strong basic anion exchange resin (Amberlite IRA-402BL having an effective size of 0.45 mm) was filled in the anode side of the anion exchange membrane to a thickness of 1.7 mm insteadof the gel type strong basic anion exchange resin (Amberlite IRA-402BL) filled in the concentrating chamber and a mesh-shaped structure having a mesh size of 60 meshes is filled between the gel type strongly basic anion exchange resin and the cation exchange membrane to a thickness of 0.3 mm. Resistivity of the treated water after 4000 hours of operation and operational conditions are shown in Table 1.

### Comparative Example 1

An operation similar to that for the Example 1 was performed except that a mesh-shaped structure having a mesh size of 12 meshes and a thickness of 1 mm was filled instead of the gel type strong basic anion exchange resin (IRA-402BL) filled into the concentrating chamber and the thickness of the concentrating chamber was set to 1 mm. In the Comparative Example 1, because the voltage reached 250 V after 100 hours of operation, the operation of the apparatus was stopped and presence of scales within the concentrating chamber was observed. Resistivity of the treated water after 100 hours of operation and operational conditions are shown in Table 1.

### Comparative Example 2

An operation similar to that for the Example 1 was performed except that permeate water of reverse osmosis membrane treating industrial water from which carbon dioxide was removed through a membrane type degasifier was used instead of permeate water of reverse osmosis membrane treating industrial water. In the Comparative Example 2, because the voltage reached 250 V after 150 hours of operation, the operation of the apparatus was stopped and presence of scales within the concentrating chamber was observed. Resistivity of the treated water after 150 hours of operation and operational conditions are shown in Table 1.

**[Table 1]**

| | EXAMPLE 1 | EXAMPLE 2 | EXAMPLE 3 | COMPARATIVE EXAMPLE 1 | COMPARATIVE EXAMPLE 2 |
|---|---|---|---|---|---|
| APPLIED VOLATAGE (V) | 75 | 80 | 80 | 250 | 250 |
| CURRENT (A) | 0.6 | 0.6 | 0.6 | 0.6 | 0.6 |
| RESISTIVITY OF TREATED WATER (MΩ·cm) | 17.0 | 17.5 | 17.9 | 10.5 | 11.0 |
| PRESENCE OF SCALES | NOT OBSERVED | NOT OBSERVED | NOT OBSERVED | OBSERVED | OVSERVED |

As described, according to the present embodiment, it is possible to solve the problem of formation of scales by controlling conditions of water to be supplied to the concentrating chamber of the EDI unit and to achieve a stable operation without noticeable amount of formation of scales within the concentration chamber even in a continuous treatment for a long period of time of water to be treated having a high concentration of hardness components. In addition, the conductivity within the concentrating chamber can be stabilized, uniform current density can be obtained in the entire desalination chamber from the entrance side to the exit side, and power consumption can be reduced.

## Claims

1. A method for operating an electrodeionization deionized water producing apparatus,
the apparatus comprising, between an anode chamber (32b) having an anode (37) and a cathode chamber (32a) having a cathode (36),
a desalination chamber (D) in which a side near the anode (37) is demarcated by an anion exchange membrane (34) and a side near the cathode (36) is demarcated by a cation exchange membrane (33) and
a concentrating chamber (31) in which a side near the anode (37) is demarcated by a cation exchange membrane (33) and a side near the cathode (36) is demarcated by an anion exchange membrane (34),
wherein in the concentrating chamber (31) the anode side of the anion exchange membrane (34) is filled with an anion exchanger (62),
the method comprising the step of:
supplying water containing free carbon dioxide to the concentrating chamber (31).

2. A method for operating an electrodeionization deionized water producing apparatus,
the apparatus comprising, between an anode chamber (32b) having an anode (37) and a cathode chamber (32a) having a cathode (36),
a desalination chamber (D) in which a side near the anode (37) is demarcated by an anion exchange membrane (34) and a side near the cathode (36) is demarcated by a cation exchange membrane (33) and
a concentrating chamber (31) in which a side near the anode (37) is demarcated by a cation exchange membrane (33) and a side near the cathode (36) is demarcated by an anion exchange membrane (34),
wherein the concentrating chamber (31) is filled with a mixture ion exchanger (39) of an anion exchanger and a cation exchanger, wherein a percentage of the cation exchanger increases from the side near the anion exchange membrane (34) toward the side near the cation exchange membrane (33),
the method comprising the step of:
supplying water containing free carbon dioxide to the concentrating chamber (31).

3. A method for operating an electrodeionization deionized water producing apparatus according to Claim 1, wherein in the concentrating chamber (31), an anion exchanger (62) is provided on the anode side of the anion exchange membrane (34) and a water permeating material having no strongly basic anion exchange group (60) is provided between the anion exchanger (62) and the cation exchange membrane (33).

4. A method for operating an electrodeionization deionized water producing apparatus according to any one of Claims 1 through 3, wherein the water to be supplied to the concentrating chamber (31) is water having a concentration of free carbon dioxide of 0.5 mg-CO2/l - 200 mg-CO2/l, preferably a concentration of free carbon dioxide of 2 mg-CO2/l - 150 mg-CO2/l.

5. An electrodeionization deionized water producing system having an electrodeionization deionized water producing apparatus, wherein
the electrodeionization deionized water producing apparatus comprises, between an anode chamber (32b) having an anode (37) and a cathode chamber (32a) having a cathode (36),
a desalination chamber (D) in which a side near the anode (37) is demarcated by an anion exchange membrane (34) and a side near the cathode (36) is demarcated by a cation exchange membrane (33) and
a concentrating chamber (31) in which a side near the anode (37) is demarcated by a cation exchange membrane (33) and a side near the cathode (36) is demarcated by an anion exchange membrane (34),
wherein in the concentrating chamber (31) the anode side of the anion exchange membrane (34) is filled with an anion exchanger (62);
a decarbonator (20) is provided upstream of the electrodeionization deionized water producing apparatus;
treated water of the decarbonator (20) is supplied to the desalination chamber (D) of the electrodeionization deionized water producing apparatus; and
water to be treated by the decarbonator (20) is supplied, without being treated by the decarbonator (20), to the concentrating chamber (31) of the electrodeionization deionized water producing apparatus, so that water containing free carbon dioxide can be supplied to the concentrating chamber (31).

6. An electrodeionization deionized water producing system having an electrodeionization water producing apparatus, wherein
the electrodeionization deionized water producing apparatus comprises, between an anode chamber (32b) having an anode (37) and a cathode chamber (32a) having a cathode (36),
a desalination chamber (D) in which a side near the anode (37) is demarcated by an anion exchange membrane (34) and a side near the cathode (36) is demarcated by a cation exchange membrane (33) and
a concentrating chamber (31) in which a side near the anode (37) is demarcated by a cation exchange membrane (33) and a side near the cathode (36) is demarcated by an anion exchange membrane (34),
wherein the concentrating chamber (31) is filled with a mixture ion exchanger (39) of an anion exchanger and a cation exchanger, wherein a percentage of the cation exchanger increases from the side near the anion exchange membrane (34) toward the side near the cation exchange membrane (33);
a decarbonator (20) is provided upstream of the electrodeionization deionized water producing apparatus;
treated water of the decarbonator (20) is supplied to the desalination chamber (D) of the electrodeionization water producing apparatus; and
water to be treated by the decarbonator (20) is supplied, without being treated by the decarbonator (20), to the concentrating chamber (31) of the electrodeionization deionized water producing apparatus, so that water containing free carbon dioxide can be supplied to the concentrating chamber (31).

7. An electrodeionization deionized water producing system according to claim 5, wherein in the concentrating chamber (31), an anion exchanger (62) is provided on the anode side of the anion exchange membrane (34) and a water permeating material having no strongly basic anion exchange group (60) is provided between the anion exchanger (62) and the cation exchange membrane (33).

## Patentansprüche

1. Ein Verfahren zum Betreiben einer Elektrodeionisierungsvorrichtung zum Produzieren von deionisiertem Wasser,
wobei die Vorrichtung zwischen einer Anodenkammer (32b), die eine Anode (37) aufweist, und einer Kathodenkammer (32a), die eine Kathode (36) aufweist, aufweist:
eine Entsalzungskammer (D), in der eine Seite nahe bei der Anode (37) durch eine Anionenaustauschmembran (34) demarkiert ist und eine Seite nahe bei der Kathode (36) durch eine Kationenaustauschmembran (33) demarkiert ist, und
eine Konzentrationskammer (31), in der eine Seite nahe bei der Anode (37) durch eine Kationenaustauschmembran (33) demarkiert ist und eine Seite nahe bei der Kathode (36) durch eine Anionenaustauschmembran (34) demarkiert ist,
wobei in der Konzentrationskammer (31) die Anodenseite der Anionenaustauschmembran (34) mit einem Anionenaustauscher (62) gefüllt ist,
wobei das Verfahren den folgenden Schritt aufweist:
Zuführen von Wasser, das freies Kohlenstoffdioxid enthält, in die Konzentrationskammer (31).

2. Ein Verfahren zum Betreiben einer Elektrodeionisierungsvorrichtung zum Produzieren von deionisiertem Wasser,
wobei die Vorrichtung zwischen einer Anodenkammer (32b), die eine Anode (37) aufweist, und einer Kathodenkammer (32a), die eine Kathode (36) aufweist, aufweist:
eine Entsalzungskammer (D), in der eine Seite nahe bei der Anode (37) durch eine Anionenaustauschmembran (34) demarkiert ist und eine Seite nahe bei der Kathode (36) durch eine Kationenaustauschmembran (33) demarkiert ist, und
eine Konzentrationskammer (31), in der eine Seite nahe bei der Anode (37) durch eine Kationenaustauschmembran (33) demarkiert ist und eine Seite nahe bei der Kathode (36) durch eine Anionenaustauschmembran (34) demarkiert ist,
wobei die Konzentrationskammer (31) mit einem Mischungs-Ionenaustauscher (39) aus einem Anionenaustauscher und einem Kationenaustauscher gefüllt ist, wobei ein prozentualer Anteil des Kationenaustauschers von der Seite nahe bei der Anionenaustauschmembran (34) in Richtung zu der Seite nahe bei der Kationenaustauschmembran (33) ansteigt,
wobei das Verfahren den folgenden Schritt aufweist:
Zuführen von Wasser, das freies Kohlenstoffdioxid enthält, in die Konzentrationskammer (31).

3. Ein Verfahren zum Betreiben einer Elektrodeionisierungsvorrichtung zum Produzieren von deionisiertem Wasser gemäß Anspruch 1, wobei in der Konzentrationskammer (31) ein Anionenaustauscher (62) auf der Anodenseite der Anionenaustauschmembran (34) vorgesehen ist und ein Wasserdurchdringungsmaterial, das keine stark basische Anionenaustauschgruppe (60) hat, zwischen dem Anionenaustauscher (62) und der Kationenaustauschmembran (33) vorgesehen ist.

4. Ein Verfahren zum Betreiben einer Elektrodeionisierungsvorrichtung zum Produzieren von deionisiertem Wasser gemäß irgendeinem der Ansprüche 1 bis 3, wobei das der Konzentrationskammer (31) zuzuführende Wasser Wasser mit einer Konzentration von freiem Kohlenstoffdioxid von 0,5 mg-CO2/l bis 200 mg-CO2/l, vorzugsweise einer Konzentration von freiem Kohlenstoffdioxid von 2 mg-CO2/l bis 150 mg-/CO2/l ist.

5. Ein Elektrodeionisierungssystem zum Produzieren von deionisiertem Wasser, das eine Elektrodeionisierungsvorrichtung zum Produzieren von deionisiertem Wasser aufweist, wobei
die Elektrodeionisierungsvorrichtung zum Produzieren von deionisiertem Wasser zwischen einer Anodenkammer (32b), die eine Anode (37) aufweist, und einer Kathodenkammer (32a), die eine Kathode (36) aufweist, aufweist:
eine Entsalzungskammer (D), in der eine Seite nahe bei der Anode (37) durch eine Anionenaustauschmembran (34) demarkiert ist und eine Seite nahe bei der Kathode (36) durch eine Kationenaustauschmembran (33) demarkiert ist, und
eine Konzentrationskammer (31), in der eine Seite nahe bei der Anode (37) durch eine Kationenaustauschmembran (33) demarkiert ist und eine Seite nahe bei der Kathode (36) durch eine Anionenaustauschmembran (34) demarkiert ist,
wobei in der Konzentrationskammer (31) die Anodenseite der Anionenaustauschmembran (34) mit einem Anionenaustauscher (62) gefüllt ist,
ein Decarbonisierer (20) stromaufwärts von der Elektrodeionisierungsvorrichtung zum Produzieren von deionisiertem Wasser vorgesehen ist,
behandeltes Wasser des Decarbonisierers (20) der Entsalzungskammer (D) der Elektrodeionisierungsvorrichtung zum Produzieren von deionisiertem Wasser zugeführt wird, und
durch den Decarbonisierer (20) zu behandelndes Wasser ohne durch den Decarbonisierer (20) behandelt zu werden der Konzentrationskammer (31) der Elektrodeionisierungsvorrichtung zum Produzieren von deionisiertem Wasser zugeführt wird, so dass Wasser, das freies Kohlenstoffdioxid enthält, der Konzentrationskammer (31) zugeführt werden kann.

6. Ein Elektrodeionisierungssystem zum Produzieren von deionisiertem Wasser, das eine Elektrodeionisierungsvorrichtung zum Produzieren von deionisiertem Wasser aufweist, wobei
die Elektrodeionisierungsvorrichtung zum Produzieren von deionisiertem Wasser zwischen einer Anodenkammer (32b), die eine Anode (37) aufweist, und einer Kathodenkammer (32a), die eine Kathode (36) aufweist, aufweist:
eine Entsalzungskammer (D), in der eine Seite nahe bei der Anode (37) durch eine Anionenaustauschmembran (34) demarkiert ist und eine Seite nahe bei der Kathode (36) durch eine Kationenaustauschmembran (33) demarkiert ist, und
eine Konzentrationskammer (31), in der eine Seite nahe bei der Anode (37) durch eine Kationenaustauschmembran (33) demarkiert ist und eine Seite nahe bei der Kathode (36) durch eine Anionenaustauschmembran (34) demarkiert ist,
wobei die Konzentrationskammer (31) mit einem Mischungs-Ionenaustauscher (39) aus einem Anionenaustauscher und einem Kationenaustauscher gefüllt ist, wobei ein prozentualer Anteil des Kationenaustauschers von der Seite nahe bei der Anionenaustauschmembran (34) in Richtung zu der Seite nahe bei der Kationenaustauschmembran (33) ansteigt,
ein Decarbonisierer (20) stromaufwärts von der Elektrodeionisierungsvorrichtung zum Produzieren von deionisiertem Wasser vorgesehen ist,
behandeltes Wasser des Decarbonisierers (20) der Entsalzungskammer (D) der Elektrodeionisierungsvorrichtung zum Produzieren von deionisiertem Wasser zugeführt wird, und
durch den Decarbonisierer (20) zu behandelndes Wasser ohne durch den Decarbonisierer (20) behandelt zu werden der Konzentrationskammer (31) der Elektrodeionisierungsvorrichtung zum Produzieren von deionisiertem Wasser zugeführt wird, so dass Wasser, das freies Kohlenstoffdioxid enthält, der Konzentrationskammer (31) zugeführt werden kann.

7. Ein Elektrodeionisierungssystem zum Produzieren von deionisiertem Wasser gemäß Anspruch 5, wobei in der Konzentrationskammer (31) ein Anionenaustauscher (62) auf der Anodenseite der Anionenaustauschmembran (34) vorgesehen ist und ein Wasserdurchdringungsmaterial, das keine stark basische Anionenaustauschgruppe (60) aufweist, zwischen dem Anionenaustauscher (62) und der Kationenaustauschmembran (33) vorgesehen ist.

## Revendications

1. Procédé de fonctionnement d'un appareil de production d'eau désionisée par désionisation électrique en continu,
l'appareil comprenant, entre une chambre d'anode (32b) ayant une anode (37) et une chambre de cathode (32a) ayant une cathode (36),
une chambre de désalinisation (D) dans laquelle un côté proche de l'anode (37) est démarqué par une membrane d'échange d'anions (34) et un côté proche de la cathode (36) est démarqué par une membrane d'échange de cations (33) et
une chambre de concentration (31) dans laquelle un côté proche de l'anode (37) est démarqué par une membrane d'échange de cations (33) et un côté proche de la cathode (36) est démarqué par une membrane d'échange d'anions (34),
dans lequel, dans la chambre de concentration (31), le côté anode de la membrane d'échange d'anions (34) est remplie avec un échangeur d'anions (62),
le procédé comprenant l'étape consistant à :
fournir de l'eau contenant du dioxyde de carbone libre à la chambre de concentration (31).

2. Procédé de fonctionnement d'un appareil de production d'eau désionisée par désionisation électrique en continu,
l'appareil comprenant, entre une chambre d'anode (32b) ayant une anode (37) et une chambre de cathode (32a) ayant une cathode (36),
une chambre de désalinisation (D) dans laquelle un côté proche de l'anode (37) est démarqué par une membrane d'échange d'anions (34) et un côté proche de la cathode (36) est démarqué par une membrane d'échange de cations (33), et
une chambre de concentration (31) dans laquelle un côté proche de l'anode (37) est démarqué par une membrane d'échange de cations (33) et un côté proche de la cathode (36) est démarqué par une membrane d'échange d'anions (34),
dans lequel la chambre de concentration (31) est remplie avec un échangeur d'ions à mélange (39) d'un échangeur d'anions et d'un échangeur de cations, dans lequel un pourcentage de l'échangeur de cations augmente entre le côté proche de la membrane d'échange d'anions (34) et le côté proche de la membrane d'échange de cations (33),
le procédé comprenant l'étape consistant à :
fournir de l'eau contenant du dioxyde de carbone libre à la chambre de concentration (31).

3. Procédé de fonctionnement d'un appareil de production d'eau désionisée par désionisation électrique en continu selon la revendication 1, dans lequel, dans la chambre de concentration (31), un échangeur d'anions (62) est prévu côté anode de la membrane d'échange d'anions (34) et un matériau de perméation de l'eau n'ayant aucun groupe d'échange d'anions fortement basiques (60) est prévu entre l'échangeur d'anions (62) et la membrane d'échange de cations (33).

4. Procédé de fonctionnement d'un appareil de production d'eau désionisée par désionisation électrique en continu selon l'une quelconque des revendications 1 à 3, dans lequel l'eau à fournir à la chambre de concentration (31) est de l'eau présentant une concentration en dioxyde de carbone libre de 0,5 mg-CO2/l à 200 mg/CO2/l, de préférence une concentration en dioxyde de carbone libre de 2 mg-CO2/l à 150 mg-CO2/l.

5. Système de production d'eau désionisée par désionisation électrique en continu ayant un appareil de production d'eau désionisée par désionisation électrique en continu, dans lequel
l'appareil de production d'eau désionisée par désionisation électrique en continu comprend, entre une chambre d'anode (32b) ayant une anode (37) et une chambre de cathode (32a) ayant une cathode (36),
une chambre de désalinisation (D) dans laquelle un côté proche de l'anode (37) est démarqué par une membrane d'échange d'anions (34) et une côté proche de la cathode (36) est démarqué par une membrane d'échange de cations (33), et
une chambre de concentration (31) dans laquelle un côté proche de l'anode (37) est démarqué par une membrane d'échange de cations (33) et un côté proche de la cathode (36) est démarqué par une membrane d'échange d'anions (34),
dans lequel, dans la chambre de concentration (31), le côté anode de la membrane d'échange d'anions (34) est rempli avec un échangeur d'anions (62) ;
un décarbonateur (20) est prévu en amont de l'appareil de production d'eau désionisée par désionisation électrique en continu ;
l'eau traitée du décarbonateur (20) est fournie à la chambre de destination (D) de l'appareil de production d'eau désionisée par désionisation électrique en continu ; et
l'eau à traiter par le décarbonateur (20) est fournie, sans être traitée par le décarbonateur (20), à la chambre de concentration (31) de l'appareil de production d'eau désionisée par désionisation électrique en continu, de sort que l'eau qui contient du dioxyde de carbone libre puisse être fournie à la chambre de concentration (31).

6. Système de production d'eau désionisée par désionisation électrique en continu ayant un appareil de production d'eau désionisée par désionisation électrique en continu, dans lequel
l'appareil de production d'eau désionisée par désionisation électrique en continu comprend, entre la chambre d'anode (32b) ayant une anode (37) et une chambre de cathode (32a) ayant une cathode (36),
une chambre de désalinisation (D) dans laquelle un côté proche de l'anode (37) est démarqué par une membrane d'échange d'anions (34) et un côté proche de la cathode (36) est démarqué par une membrane d'échange de cations (33), et
une chambre de concentration (31) dans laquelle un côté proche de l'anode (37) est démarqué par une membrane d'échange de cations (33) et un côté proche de la cathode (36) est démarqué par une membrane d'échange d'anions (34),
dans lequel la chambre de concentration (31) est remplie avec un échangeur d'ions à mélange (39) d'un échangeur d'anions et d'un échangeur de cations, dans lequel un pourcentage de l'échangeur de cations augmente entre le côté proche de la membrane d'échange d'anions (34) et le côté proche de la membrane d'échange de cations (33) ;
un décarbonateur (20) est prévu en amont de l'appareil de production d'eau désionisée par désionisation électrique en continu ;
l'eau traitée du décarbonateur (20) est fournie à la chambre de désalinisation (D) de l'appareil de production d'eau désionisée par désionisation électrique en continu ; et
l'eau à traiter par le décarbonateur (20) est fournie, sans être traitée par le décarbonateur (20), à la chambre de concentration (31) de l'appareil de production d'eau désionisée par désionisation électrique en continu, de sorte que l'eau qui contient du dioxyde de carbone libre puisse être fournie à la chambre de concentration (31).

7. Système de production d'eau désionisée par désionisation électrique en continu selon la revendication 5, dans lequel, dans la chambre de concentration (31), un échangeur d'anions (62) est prévu côté anode de la membrane d'échange d'anions (34) et un matériau de perméation de l'eau n'ayant aucun groupe d'échange d'anions fortement basiques (60) est prévu entre l'échangeur d'anions (62) et la membrane d'échange de cations (33).
